(19) Europäisches Patentamt
European Patent Office
Office européen des brevets

(11) EP 1 121 973 B1

(12) **EUROPEAN PATENT SPECIFICATION**

(45) Date of publication and mention of the grant of the patent:
**27.10.2004 Bulletin 2004/44**

(51) Int Cl.7: **B01F 3/08**, G01N 29/02, G01N 15/02

(21) Application number: **00101646.8**

(22) Date of filing: **01.02.2000**

# (54) Intelligent quality measurement and supervision system

Intelligente Qualitätsmessung und System zur Überwachung

Mesure intelligente de la qualité et système pour la surveillance

(84) Designated Contracting States:
**DE**

(43) Date of publication of application:
**08.08.2001 Bulletin 2001/32**

(73) Proprietor: **APV Homogenisers AS**
**2620 Albertslund (DK)**

(72) Inventors:
- **Jarchau, Michael**
**23566 Lübeck (DE)**
- **Jahnke, Steffen**
**23923 Herrnburg bei Lübeck (DE)**

(74) Representative: **HOFFMANN - EITLE**
**Patent- und Rechtsanwälte**
**Arabellastrasse 4**
**81925 München (DE)**

(56) References cited:
**EP-A- 0 801 305**
**DE-A- 3 221 476**
**DE-A- 3 319 922**
**US-A- 5 104 670**
**US-A- 5 343 044**
**US-A- 5 403 088**
**US-A- 5 428 443**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### FIELD OF INVENTION

The present invention relates to an intelligent quality measurement and supervision system, and in particular to the measurement of an homogenizing degree for a dispersion in an online manner according to the preamble of claim 1.

### TECHNOLOGICAL BACKGROUND OF INVENTION

The present invention relates to the quality supervision of dispersions. Generally, dispersion is a general term covering emulsions - i.e. a mixture of different liquids - and suspensions - i.e. a mixture of particles into at least one liquid. Dispersions are, e.g., used in the field of production of dairy products, delicatessen, basic materials, sweeties, pharmaceuticals, cosmetics, nurse products, juice products, further food ingredients.

Typically, dispersions are produced in a homogenizer using the principle of high-pressure expansion. The homogenizer comprises a high-pressure reciprocating pump with an expansion unit attached to the output thereof. In the reciprocating pump the dispersion is compressed to high pressure and subsequent thereto the product is again expanded, e.g., in a homogenizing valve comprising two parts to define an adjustable precision gap. In this precision gap the flowing dispersion is accelerated and subjected to a strong turbulence. This leads to high shearing strength and thus to a dispersion of the particle in a sub-microscopic range and further to an intense mixing process.

Alternatively, dispersions may be produced using a colloid mill where the size or particles in dispersion is reduced using a frictional effect, e.g., between two surfaces carrying out a relative movement with respect to each other.

Generally, a homogenizing process improves the characteristic of a dispersion. Typical effects are a homogeneous distribution, the avoidance of creaming or sedimentation of the dispersed phase during a long period of time and thus the increase of the physical storage stability.

Also, homogenization serves to suppress premature coalescence and phase separation, further to desintegrate desagglomerate, to achieve fibrillate fibrous components, to improve the colour of the product, to improve the mixing and dilution capability and further to optimize the rheological characteristics.

During production of different products the related product quality, e.g., may be measured only indirectly via the homogenization degree. However, currently this determination of the homogenizing degree is carried out offline. This means that at defined places in the production line samples are taken at predetermined times and then examined in a laboratory. Therefore, the results are only available with a high time delay. Eventual deviations or disturbances in the product quality - in particular of the physical stability - may only be detected and compensated for with a long delay.

To carry out such an offline measurement of the homogenizing degree, there may be used, e.g., the centrifugal method according to NIZO being used in the milk industry, see J.J. Mol, De Boordeling van de Werking van Homogenisatoren, NIZO Nieuws No. 9/VI (1963).

Further approaches rely on mephilometric analysis or particle size spectroscopy, e.g., on the basis of light diffraction, light scattering, photo correlation and further ultrasonic spectroscopy, etc. With these measurement methods at least one of the following disadvantages arises: the measured quantities are not available online; the dispersion to be measured must be prepared, e.g., through dilution or using a dispersant; and/or higher investment and operative costs for the used measurement technology.

In DE-A-33 19 922, there is disclosed a system for the supervision of the quality of a dispersion having at least one measurement sensor adapted to measure the homogenizing degree of the dispersion, wherein the measurement sensor is connected with a dispersing unit.

However, in view of ever more sophisticated products - e.g., UHT products - it is important to already note during production of these products whether the quality and homogenizing effect is in compliance with the defined standards.

### SUMMARY OF THE INVENTION

In view of the above, the object of the invention is to provide a system for the real time supervision of a homogenizing degree.

According to the present invention this object is achieved with the supervision system for the quality of a dispersion having the features of claim 1.

Therefore, the use of the measurement sensor for online measurement being connected to the dispersion unit allows for an improved quality measurement and supervision functionality.

In other words, the online measurement avoids a delay between identification of problems and the correction of the underlying fault, and thus the production of dispersion in the dispersion unit that does not fulfil predetermined quality standards.

Further, the measurement sensor may be realized in a cost-effective manner so that the inventive coupling of such a measurement sensor to the dispersion unit allows to achieve the improved measurement quality at reduced costs.

Another important advantage of the present invention is the decoupling of the actual measurement step and the evaluation of the measured quantity. In other words, since the evaluation unit is provided separately it is possible to achieve a more flexible evaluation of the measured quantity, i.e., through configuration according to characteristic parameters of the dispersion, e.g. fat content of milk as one typical example for a dispersion to be processed.

Also, the measurement sensor is not restricted to the output of only a single measured quantity but it may also be adapted to output a plurality of measured quantities, e.g., defining a characteristic distribution for the dispersion flowing in the dispersion unit. In this case it is possible to achieve an improved measurement of the homogenizing degree since additional measured data and thus additional information is available for subsequent processing.

Also, according to the present invention, at the output of the configurable evaluation unit there is provided a configurable mapping means adapted to map the characteristic value output through the evaluation unit to characteristic data defining the homogenizing degree of the dispersion in the dispersing unit. The mapping means is configured according to the characteristics of the dispersion.

Therefore, this mapping unit allows to further process the at least one characteristic value output by the evaluation unit to achieve the desired homogenizing degree. This differentiation between the actual processing of the measured quantity and the mapping thereof into the characteristic value and the subsequent mapping of the characteristic value into characteristic data defining the homogenizing degree allows for increased modularity of the overall system for the supervision of the quality of the dispersion in the dispersing unit.

In other words, according to the invention there is achieved a separation, e.g., between the processing of measurement raw data in the evaluation unit and the subsequent additional processing to derive the homogenizing degree. This decoupling of measurement related evaluation and product specific derivation of the homogenizing degree allows for an increased maintainability of the supervision system.

Further, in case the determined homogenizing degree is not related to reasonable values, e.g., when processing a test dispersion of which the characteristics are known this may be used as a basis for tuning the evaluation unit before the actual practical application of the supervision system. This feedback mechanism may also be used to tune the sensibility of the evaluation unit according to a modified characteristic of the dispersion, e.g., a changed contents of milk or particles size distribution thereof.

This allows to achieve optimal tuning of the system performance to the dispersion of which the homogenizing degree is to be determined and thus to achieve a high accuracy and scope that is suited for a broad range of homogenizer applications. This is of particular importance in view of more expensive products to be expected in the future for which the homogenizing degree is to be determined, e.g. milk having nutritional components or further high quality food products.

According to a preferred embodiment of the present invention, the measurement sensor is arranged in an outlet conduit of a dispersion unit.

This arrangement allows for an in sito measurement where the measurement sensor is surrounded by the product of which the homogenizing degree is to be measured. Also, another important advantage of this arrangement is that the homogenizing degree may be measured without any modification of the dispersion, i.e., without any dilution thereof. Therefore, the measurement accuracy is further improved.

According to yet another preferred embodiment of the present invention, a further measurement sensor is arranged in an inlet conduit of the dispersing unit.

Hereby it is possible again to gain additional information on the homogenizing degree, i.e. before the processing thereof in the dispersing unit and after the processing thereof. Therefore, in case the homogenizing effect is not satisfactory it is possible to identify whether the reason for the non-satisfying homogenizing effect is to be found in the dispersion unit itself or is due to the characteristics of the dispersion. Further, this aspect allows to identify up/downstream processing problems, i.e. problems with respect to the handling of the product upstream or downstream the dispersing unit.

Generally, in case a plurality of measurement sensors are provided at different stages in the system further information of the homogenizing degree at different stages in the processing system for the dispersion may be gained and then used to identify the operative effectiveness of different subunits in the production system.

## DESCRIPTION OF DRAWING

In the following preferred embodiments of the present invention will be described with reference to the accompanying drawings in which

Fig. 1 shows the in-line measurement of the homogenization degree according to the present invention;

Fig. 2 shows a correlation between the homogenization degree and the output signal of the measurement sensor;

Fig. 3 shows a schematic diagram of the supervision system according to the present invention;

Fig. 4 shows a charactistic curve for the mapping of the output of the evaluation unit into a homogenizing degree according to the present invention;

Fig. 5 shows the provision of a measurement sensor in the outlet conduit of the dispersing unit according to the present invention;

Fig. 6 shows the provision of two measurement sensors at the inlet conduit and the outlet conduit of the dispersion unit according to the present invention;

Fig. 7 shows the control of the dispersion unit on the basis of the supervision system according to the present invention.

## DESCRIPTION OF PREFERRED EMBODIMENTS

As will be outlined in more detail in the following, one aspect underlying the present invention is the use of a measurement sensor outputting a signal in correlation to a homogenization degree of a dispersion flowing in a dispersing unit. In particular, the measurement sensor is used such that it outputs measurement signals online continuously for immediate subsequent processing.

Irrespective of the particular measurement sensor used, the mentioned inventors have found that the direct coupling of a measurement sensor is responsive to a homogenization degree flowing through a dispersion unit. This direct coupling to the dispersion unit allows for an online measurement of the homogenization degree.

Fig. 1 shows the in-line measurement of the homogenization degree according to the present invention. Here, the homogenization degree shown at the ordinate is expressed according to the NIZO method mentioned above. Further, the abscissa illustrates the processing time for the dispersing unit processing the dispersion to be measured. In the particular case shown in Fig. 1 the dispersion is a 3.5% oil-in-water test emulsion.

As shown in Fig. 1, initially a 3.5% oil-in-water test emulsion is supplied to the dispersion unit and then after a certain time the pressure is set at 100 bar. Therefore, after a certain time the homogenization degree is increased starting from 30% to approximately 70%. Hereafter, a further increase of the homogenization degree may be achieved by setting the pressure to 200 bar after approximately 200 sec. and to 300 bar after approximately 350 sec. and further from 300 to 400 bar after approximately 620 sec. However, as shown in Fig. 1 with continued increase of pressure a further increase, e.g., in 100 bar steps, only achieves a reduced improvement in the homogenization degree leading to a maximum homogenization degree of approximately 95%.

As also shown in Fig. 1, after a processing time of approximately 900 sec. in case the pressure is again set to 0 bar, the homogenization degree sharply declines. A further degree of the homogenization degree may be observed in case an air alarm is detected, e.g., at approximately 970 sec. of processing time. At the end of this air alarm after a processing time of approximately 1050 sec., the homogenizing degree further declines in case a cleaning of the dispersing unit is carried out with water.

It may be concluded from Fig. 1 that a direct coupling of a measurement sensor being responsive to the homogenization degree of the dispersion flowing over the dispersion unit leads to an output signal that immediately follows the different operative conditions in the dispersion unit. In other words, the direct coupling allows to achieve an indication of the homogenization degree of the dispersion flowing in the dispersion unit.

Fig. 2 shows a correlation between the measure of homogenization degree, e.g., according to the NIZO method and the signal value output by the measurement sensor to be used according to the present invention. Here, the ordinate again shows the homogenization degree and the abscissa shows the signal value S output by the measurement sensor. The measurement results shown in Fig. 2 are related to a 3.5% oil-in-water test emulsion.

As can be seen from Fig. 2, the higher the homogenization degree, the lower the signal value output by the measurement sensor. Also, there exists a consistent relation between the decrease of the homogenization degree and the increase of the signal value that may be used as a basis for the further processing of the output signal of the measurement sensor.

Using the general principle outlined in Figs. 1 and 2, Fig. 3 shows a schematic diagram of the system for the supervision of the quality of a dispersion flowing over a dispering unit according to the present invention.

As shown in Fig. 3, the supervision system 10 comprises the measurement sensor 12 providing an output signal, an evaluation unit 14 connected to the output of the measurement sensor and a mapping unit 16 connected to the output of the evaluation unit 14.

As already outlined above, the measurement sensor 12 is adapted to an online measurement of the homogenization degree of the dispersion and therefore directly connected to a dispersing unit. Therefore, the measurement sensor 12 outputs a measured quantity being related to this homogenization degree in online manner.

According to the present invention, the measurement sensor may be realized, e.g., by using an ultrasonic absorption sensor. Another option to realize the measurement sensor is to use laser scattering, laser diffraction or a laser scanning method.

Further, the measurement sensor may be adapted to either output only a single measured quantity being related to the homogenization degree or even a plurality of measured quantities where each single measured quantity is determined by the homogenizing degree. A typical example for the latter case would be a particle size distribution of the dispersion flowing in the dispersing unit. Therefore, the more information is gained by the measurement sensor 12, the better the homogenization degree may be determined.

As is also shown in Fig. 3, the at least one measured quantity output by the measurement sensor 12 is supplied to an evaluation unit 14 where the output of the measurement sensor 12 is converted into at least one characteristic value defining the homogenizing degree.

Therefore, according to the present invention there is achieved a decoupling between the actual measurement step carried out through the measurement sensor and the evaluation of the measured quantity or the measured quantities. The stand-alone evaluation unit 14 allows for a decoupling between the actual measurement and the evaluation of the measurement results, in particular through a configuration of this evaluation unit 14 according to characteristic parameters of the dispersion.

As is also shown in Fig. 3, the output of the configurable evaluation unit 14 is connected to the input of the configurable mapping unit 16 adapted to map the characteristic value output by the evaluation unit 14 into characteristic data finally defining the homogenizing degree of the dispersion unit. Preferably, also this mapping unit is configured according to the characteristics of the dispersion.

The overall system architecture shown in Fig. 3 allows for a decoupling of the processing of the measurement raw data in the evaluation unit 14 and the subsequent handling of a processed measurement signal in the mapping unit 16. This decoupling of measurement related evaluation and product specific derivation of the homogenizing degree allows for increased flexibility of the supervision system. This is particular the case since both the evaluation unit 14 and the mapping unit 16 are configurable according to the characteristic values of the dispersion flowing in the dispersing unit.

Further, in case the determined homogenizing degree is not related to reasonable values - e.g., for a test dispersion used to tune the supervision system - this indication may be used to tune the evaluation unit 14 before the actual practical application of the supervision system. Feeding back the result output by the mapping unit 16 to the evaluation unit 14 allows to achieve optimized measurement results, e.g., to tune the sensibility of the evaluation unit 14 to a modified characteristic of the dispersion such as changed fat contents of milk or changed particle size distribution of the dispersion.

Further, according to the present invention it is possible to achieve a calibration of the overall supervision system by referring to a known offline method for the measurement of the homogenizing degree and by comparing the output of the mapping unit 16 with the measurement result of the offline method to achieve maximized measurement accuracy.

Fig. 4 shows a characteristic curve for the mapping of the output of the evaluation unit 14 into a homogenizing degree according to the present invention.

Here, the abscissa shows the homogenizing degree output by the mapping unit 16 and the ordinate shows the characteristic value as processed measurement result output by the evaluation unit 14.

Here, the characteristic curve is related to Fig. 2 and may be described using the following formula:

$$H = H_u - \left[ (H_u - H_l) \frac{(S - S_l)}{(S_u - S_l)} \right]$$

wherein

- $H_u$ is an upper limit value for the homogenizing degree;
- $H_l$ is a lower limit value for the homogenizing degree;
- $S_u$ is an upper limit value for the output signal of the evaluation unit 14; and
- $S_l$ is a lower limit value for the output signal of the evaluation unit 14.

Typically, the upper and lower limit values for the output signal of the evaluation unit 14 are determined in compliance with the characteristic value of the dispersion flowing in the dispersion unit, e.g., fat contents or ingredient such as stabilizers.

Typically, the parameters defining the linear relationship between the homogenizing degree and the output signal of the evaluation unit 14 are determined in compliance with the dispersion and then calibrated using the, e.g., offline measurement method.

Here, it should be noted that clearly the present invention is not related to a linear relationship for the processing of the output signal of the evaluation unit 14. Generally, any non-linear or linear relation between the output signal of the measurement sensor 12 and the homogenization degree may be specified as model and applied in a product-specific way.

During operation of the supervision system any extraordinary situation - e.g., air in the dispersion - leads to a fault indication. Such an extraordinary situation may occur if, e.g., an average value or a standard deviation of a particle size distribution exceeds a related threshold value.

While in the above, one embodiment of the present invention has been described with respect to Figs. 1 to 4, it should be noted that an integration of the different components of the supervision system shown in Fig. 3, e.g., into a single dispersion supervision unit in the form of an integrated hardware solution is also covered by the present invention. This approach is particularly useful in case a large number of such dispersion supervision systems are to be produced or used within a single or a plurality of production lines.

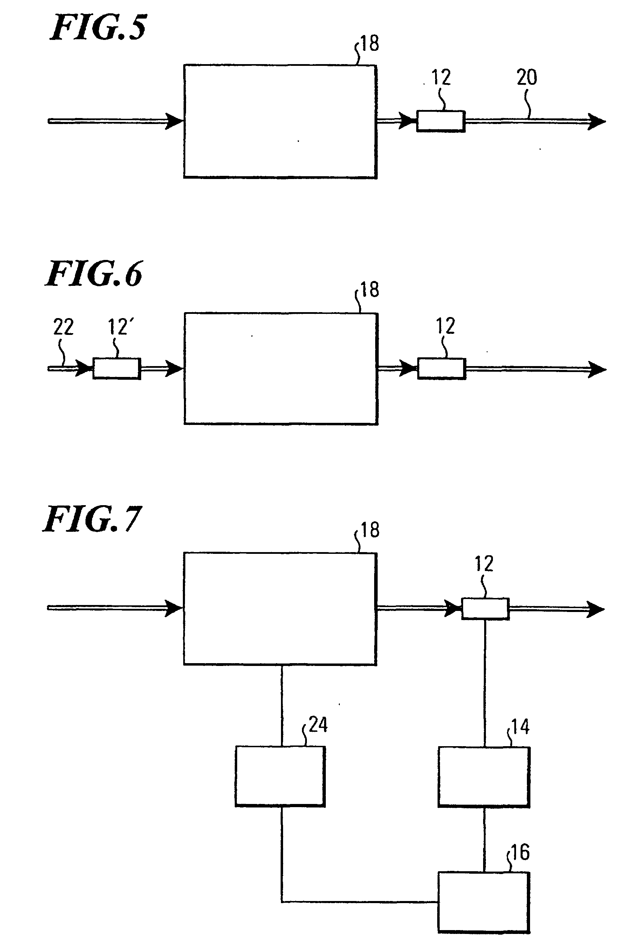

In the following, applications of the supervision unit to the production of dispersions will be illustrated with respect to Figs. 5 to 7.

The dispersion shown in Figs. 5 to 7 may be, e.g., realized as a high pressure homogenizer or a colloid mill. The actual selection of the dispersing unit depends on particular constrains for the production of dispersions.

As shown in Fig. 5, one basic approach for the coupling of the measurement sensor 12 to the dispersing unit 18 is to provide the measurement sensor in an outlet conduit 20 of the dispersing unit 18.

Therefore, the homogenizing degree of the dispersion is detected after processing in the dispersing unit 18. The arrangement with the provision of the measurement sensor at the outlet of the dispersing unit allows for an in situ measurement of the dispersion without a modification thereof thus leading to increased measurement accuracy.

As shown in Fig. 6, another option is to provide a further measurement sensor 12' in an inlet conduit 22 of the dispersing unit 18.

This leads to the additional advantage that in case the homogenizing degree achieved is not sufficient, it is possible to identify the reason for the non-satisfying homogenizing degree. I.e., one reason may be that already the premix applied to the dispersion unit 18 is non-satisfying while another reason may be that the dispersing unit 18 itself is operating in a non-satisfactory way.

The approach shown in Fig. 6 may be generalized such that a plurality of measurement sensors are provided at different stages in the overall production system (not shown) to receive additional information on the homogenizing degree at different stages in the production line for an overall process control.

Fig. 7 shows the control of the dispersing unit 18 on the basis of the supervision system according to the present invention.

As shown in Fig. 7, according to the present invention it is proposed to control the dispersion characteristics of the dispersing unit 18 on the basis of the determined homogenizing degree output by the mapping unit 16. Therefore, the output signal of this mapping unit 16 is applied to an actuator 24 shown in Fig. 7 which then, e.g., modifies the gap in a high pressure homogenizer or the gap and/or revolution number in a colloid mill.

Therefore, the different embodiments of the present invention outlined above with respect to Figs. 1 to 7 not only allow to achieve an online measurement of the homogenizing degree of a dispersion in a dispersing unit but also use the measurement result for an inverse or negative feedback control to achieve improved quality of the dispersion finally produced and to avoid any production of a faulty dispersion.

**Claims**

**1.** System for the supervision of the quality of a dispersion, comprising:

- at least one measurement sensor (12, 12') adapted to an online measurement of the homogenizing degree of the dispersion is connected with a dispersing unit (18); wherein
- the measurement sensor (12, 12') supplies at least one measured quantity to a configurable measured quantity evaluation unit (14) converting the measured quantity into at least one characteristic value;

**characterized in that**

- at the output of the configurable measured quantity evaluation unit (14) there is provided a means (16) adapted to the configurable mapping of the characteristic value S into a characteristic data according to the homogenizing degrees according to

$$H = H_u - \left[ (H_u - H_l) \frac{(S - S_l)}{(S_u - S_l)} \right]$$

wherein

- $H_u$ is an upper limit value for the homogenizing degree;
- $H_l$ is a lower limit value for the homogenizing degree;
- $S_u$ is an upper limit value for the output signal of the evaluation unit (14); and
- $S_l$ is a lower limit value for the output signal of the evaluation unit (14).

**2.** System according to claim 1, **characterized in that** the measurement sensor (12) is arranged in an outlet conduit of the dispersing unit.

**3.** System according to claim 1 or 2, **characterized in that** a further measurement sensor (12') is arranged in an inlet conduit of the dispersing unit.

**4.** System according to one of the claims 1 to 3, **characterized in that** the dispersing unit (18) is a high-pressure homogenizer or a colloid mill.

**5.** System according to claim 1, **characterized in that** the measurement sensor (12, 12') determines the measured quantity of the ultrasonic absorption in the dispersion.

**6.** System according to claim 1,
**characterized in that** the measurement sensor (12, 12') determines the measured quantity through laser scattering, laser diffraction or a laser scanning method.

**7.** System according to claims 1, 5 or 6,
**characterized in that** the measurement sensor (12, 12') outputs a plurality of measured quantities according to a characteristic distribution of the dispersion.

**8.** System according to claim 1,
**characterized in that** the configurable measured value evaluation unit (14) is configurable according to the characteristics of the dispersion.

**9.** System according to claim 4,
**characterized in that** the gapwidth in the homogenizer is controlled according to the characteristic data of the dispersion.

**10.** System according to claim 4,
**characterized in that** the gapwidth and/or number of revolutions in the colloid mill is controlled according to the characteristic data of the dispersion.

**11.** Method to monitor the quality of the dispersion generated in a dispersing unit (18), comprising the step:

- carrying out an online measurement of the homogenizing degree of the dispersion using a measurement sensor (12, 12') arranged in the dispersion flow (20, 22),

**characterized in that**

- it further comprises the step of mapping the at least one characteristic value S into characteristic data for the homogenizing degree using a configurable characteristic curve modified according to the dispersion flowing in the dispersing unit (18) according to

$$H = H_u - \left[ (H_u - H_l) \frac{(S - S_l)}{(S_u - S_l)} \right]$$

wherein

- $H_u$ is an upper limit value for the homogenizing degree;
- $H_l$ is a lower limit value for the homogenizing degree;
- $S_u$ is an upper limit value for the characteristic value; and
- $S_l$ is a lower limit value for the characteristic value.

**12.** Method according to claim 11,
**characterized in that** the measurement of the homogenizing degree is carried out by measuring the ultrasonic absorption, the laser scattering, the laser diffraction of the dispersion or using a laser scanning method.

**13.** Method according to claims 11 or 12,
**characterized in that** the dispersion characteristics of the dispersion unit (18) is controlled on the basis of the determined homogenizing degree.

**14.** Method according to one of the claims 11 to 13,
**characterized in that** it further comprises the step to verify the homogenizing degree measurement using an offline measurement method.

## Patentansprüche

**1.** System für die Überwachung der Qualität einer Dispersion, das folgendes aufweist:

- wenigstens einen Messsensor (12, 12'), der zu einer Online-Messung des Homogenisierungsmaßes der Dispersion ist und der mit einer Dispersionseinheit (18) verbunden ist; wobei
- der Messsensor (12, 12') wenigstens eine gemessene Menge zu einer konfigurierbaren Schätzeinheit (14) für eine gemessene Menge zuführt, die die gemessene Menge in wenigstens einen charakteristischen Wert umwandelt;

**dadurch gekennzeichnet, dass**

- am Ausgang der konfigurierbaren Schätzeinheit (14) für eine gemessene Menge eine Einrichtung (16) vorgesehen ist, die zu dem konfigurierbaren Abbilden des charakteristischen Werts S in charakteristische Daten gemäß den Homogenisierungsmaßen gemäß folgendem geeignet ist:

$$H = H_u - \left[ (H_u - H_l) \frac{(S - S_l)}{(S_u - S_l)} \right]$$

wobei

- $H_u$ ein oberer Grenzwert für das Homogenisierungsmaß ist;
- $H_l$ ein unterer Grenzwert für das Homogenisierungsmaß ist;
- $S_u$ ein oberer Grenzwert für das Ausgangssignal der Schätzeinheit (14) ist; und
- $S_l$ ein unterer Grenzwert für das Ausgangssignal der Schätzeinheit (14) ist.

**2.** System nach Anspruch 1, **dadurch gekennzeichnet, dass** der Messsensor (12) in einer Auslassdurchführung der Dispersionseinheit angeordnet ist.

**3.** System nach Anspruch 1 oder 2, **dadurch gekennzeichnet, dass** ein weiterer Messsensor (12') in einer Einlassdurchführung der Dispersionseinheit angeordnet ist.

**4.** System nach einem der Ansprüche 1 bis 3, **dadurch gekennzeichnet, dass** die Dispersionseinheit (18) ein Hochdruck-Homogenisierapparat oder eine Kolloidmühle ist.

**5.** System nach Anspruch 1, **dadurch gekennzeichnet, dass** der Messsensor (12, 12') die gemessene Menge der Ultraschallabsorption in der Dispersion bestimmt.

**6.** System nach Anspruch 1, **dadurch gekennzeichnet, dass** der Messsensor (12, 12') die gemessene Menge durch ein Laserstreu-, ein Laserbrechungs- oder ein Laserabtastverfahren bestimmt.

**7.** System nach Anspruch 1, 5 oder 6, **dadurch gekennzeichnet, dass** der Messsensor (12, 12') eine Vielzahl von gemessenen Mengen gemäß einer charakteristischen Verteilung der Dispersion ausgibt.

**8.** System nach Anspruch 1, **dadurch gekennzeichnet, dass** die Schätzeinheit (14) für einen konfigurierbaren gemessenen Wert gemäß den Charakteristiken der Dispersion konfigurierbar ist.

**9.** System nach Anspruch 4, **dadurch gekennzeichnet, dass** die Spaltbreite im Homogenisierapparat gemäß den charakteristischen Daten der Dispersion gesteuert wird.

**10.** System nach Anspruch 4, **dadurch gekennzeichnet, dass** die Spaltbreite und/oder eine Anzahl von Umdrehungen in der Kolloidmühle gemäß den charakteristischen Daten der Dispersion gesteuert wird.

**11.** Verfahren zum Überwachen der Qualität der in einer Dispersionseinheit (18) erzeugten Dispersion, das den folgenden Schritt aufweist:

- Ausführen einer Online-Messung des Homogenisierungsmaßes der Dispersion unter Verwendung eines Messsensors (12, 12'), der im Dispersionsfluss (20, 22) angeordnet ist,

**dadurch gekennzeichnet, dass**

- es weiterhin den Schritt zum Abbilden des wenigstens einen charakteristischen Werts S in charakteristische Daten für das Homogenisierungsmaß unter Verwendung einer konfigurierbaren charakteristischen Kurve aufweist, die gemäß der Dispersion modifiziert ist, die in der Dispersionseinheit (18) fließt, und zwar gemäß:

$$H = H_u - \left[ (H_u - H_l) \frac{(S - S_l)}{(S_u - S_l)} \right]$$

wobei

- $H_u$ ein oberer Grenzwert für das Homogenisierungsmaß ist;
- $H_l$ ein unterer Grenzwert für das Homogenisierungsmaß ist;
- $S_u$ ein oberer Grenzwert für den charakteristischen Wert ist; und
- $S_l$ ein unterer Grenzwert für den charakteristischen Wert ist.

**12.** Verfahren nach Anspruch 11, **dadurch gekennzeichnet, dass** die Messung des Homogenisierungsmaßes durch Messen der Ultraschallabsorption, der Laserstreuung, der Laserbrechung der Dispersion oder unter Verwendung eines Laserabtastverfahrens ausgeführt wird.

**13.** Verfahren nach Anspruch 11 oder 12, **dadurch gekennzeichnet, dass** die Dispersionscharakteristiken der Dispersionseinheit (18) auf der Basis des bestimmten Homogenisierungsmaßes gesteuert wird.

**14.** Verfahren nach einem der Ansprüche 11 bis 13, **dadurch gekennzeichnet, dass** es weiterhin den Schritt zum Verifizieren der Messung eines Homogenisierungsmaßes unter Verwendung eines Offline-Messverfahrens aufweist.

**Revendications**

1. Système pour la surveillance de la qualité d'une dispersion comprenant :

- au moins un capteur de mesure (12, 12') conçu pour une mesure en ligne du degré d'homogénéisation de la dispersion, relié à une unité de dispersion (18), où
- le capteur de mesure (12, 12') fournit au moins une quantité mesurée à une unité d'évaluation de quantité mesurée configurable (14) convertissant la quantité mesurée en au moins une valeur caractéristique,

**caractérisé en ce que**

- à la sortie de l'unité d'évaluation de quantité mesurée configurable (14), il est prévu un moyen (16) conçu pour le mappage configurable de la valeur caractéristique S en une donnée caractéristique suivant les degrés d'homogénéisation conformément à

$$H = H_u - \left[ (H_u - H_l) \frac{(S - S_l)}{(S_u - S_l)} \right]$$

où

- $H_u$ est une valeur limite supérieure pour le degré d'homogénéisation,
- $H_l$ est une valeur limite inférieure pour le degré d'homogénéisation,
- $S_u$ est une valeur limite supérieure pour le signal de sortie de l'unité d'évaluation (14), et
- $S_l$ est une valeur limite inférieure pour le signal de sortie de l'unité d'évaluation (14).

2. Système selon la revendication 1, **caractérisé en ce que** le capteur de mesure (12) est disposé dans un conduit de sortie de l'unité de dispersion.

3. Système selon la revendication 1 ou 2, **caractérisé en ce qu'**un autre capteur de mesure (12') est disposé dans un conduit d'entrée de l'unité de dispersion.

4. Système selon l'une des revendications 1 à 3, **caractérisé en ce que** l'unité de dispersion (18) est un homogénéisateur à haute pression ou un moulin colloïdal.

5. Système selon la revendication 1, **caractérisé en ce que** le capteur de mesure (12, 12') détermine la quantité mesurée de l'absorption par ultrasons dans la dispersion.

6. Système selon la revendication 1, **caractérisé en ce que** le capteur de mesure (12, 12') détermine la quantité mesurée par diffusion laser, diffraction laser ou un procédé de balayage laser.

7. Système selon les revendications 1, 5 ou 6, **caractérisé en ce que** le capteur de mesure (12, 12') fournit en sortie une pluralité de quantités mesurées conformément à une distribution de caractéristiques de la dispersion.

8. Système selon la revendication 1, **caractérisé en ce que** l'unité d'évaluation de valeur mesurée configurable (14) est configurable conformément aux caractéristiques de la dispersion.

9. Système selon la revendication 4, **caractérisé en ce que** la largeur d'espacement de l'homogénéisateur est commandée conformément aux données caractéristiques de la dispersion.

10. Système selon la revendication 4, **caractérisé en ce que** la largeur d'espacement et/ou le nombre de tours du moulin colloïdal est commandé conformément aux données caractéristiques de la dispersion.

11. Procédé de surveillance de la qualité de la dispersion générée dans une unité de dispersion (18), comprenant l'étape consistant à :

- exécuter une mesure en ligne du degré d'homogénéisation de la dispersion en utilisant un capteur de mesure (12, 12') disposé dans l'écoulement de dispersion (20, 22),

**caractérisé en ce que**

- il comprend en outre l'étape consistant à mapper la au moins une valeur caractéristique S en des données caractéristiques pour le degré d'homogénéisation en utilisant une courbe de caractéristiques configurable modifiée conformément à la dispersion s'écoulant dans l'unité de dispersion (18) conformément à

$$H = H_u - \left[ (H_u - H_l) \frac{(S - S_l)}{(S_u - S_l)} \right]$$

où

- $H_u$ est une valeur limite supérieure pour le degré d'homogénéisation,
- $H_l$ est une valeur limite inférieure pour le degré d'homogénéisation,
- $S_u$ est une valeur limite supérieure pour la valeur de caractéristique, et
- $S_l$ est une valeur limite inférieure pour la valeur de caractéristique.

**12.** Procédé selon la revendication 11, **caractérisé en ce que** la mesure du degré d'homogénéisation est exécutée en mesurant l'absorption par ultrasons, la diffusion laser, la diffraction laser de la dispersion ou en utilisant un procédé de balayage laser.

**13.** Procédé selon la revendication 11 ou 12, **caractérisé en ce que** les caractéristiques de dispersion de l'unité de dispersion (18) sont commandées sur la base du degré d'homogénéisation déterminé.

**14.** Procédé selon l'une des revendications 11 à 13, **caractérisé en ce qu'**il comprend en outre l'étape consistant à vérifier la mesure du degré d'homogénéisation en utilisant un procédé de mesure hors ligne.

FIG.1

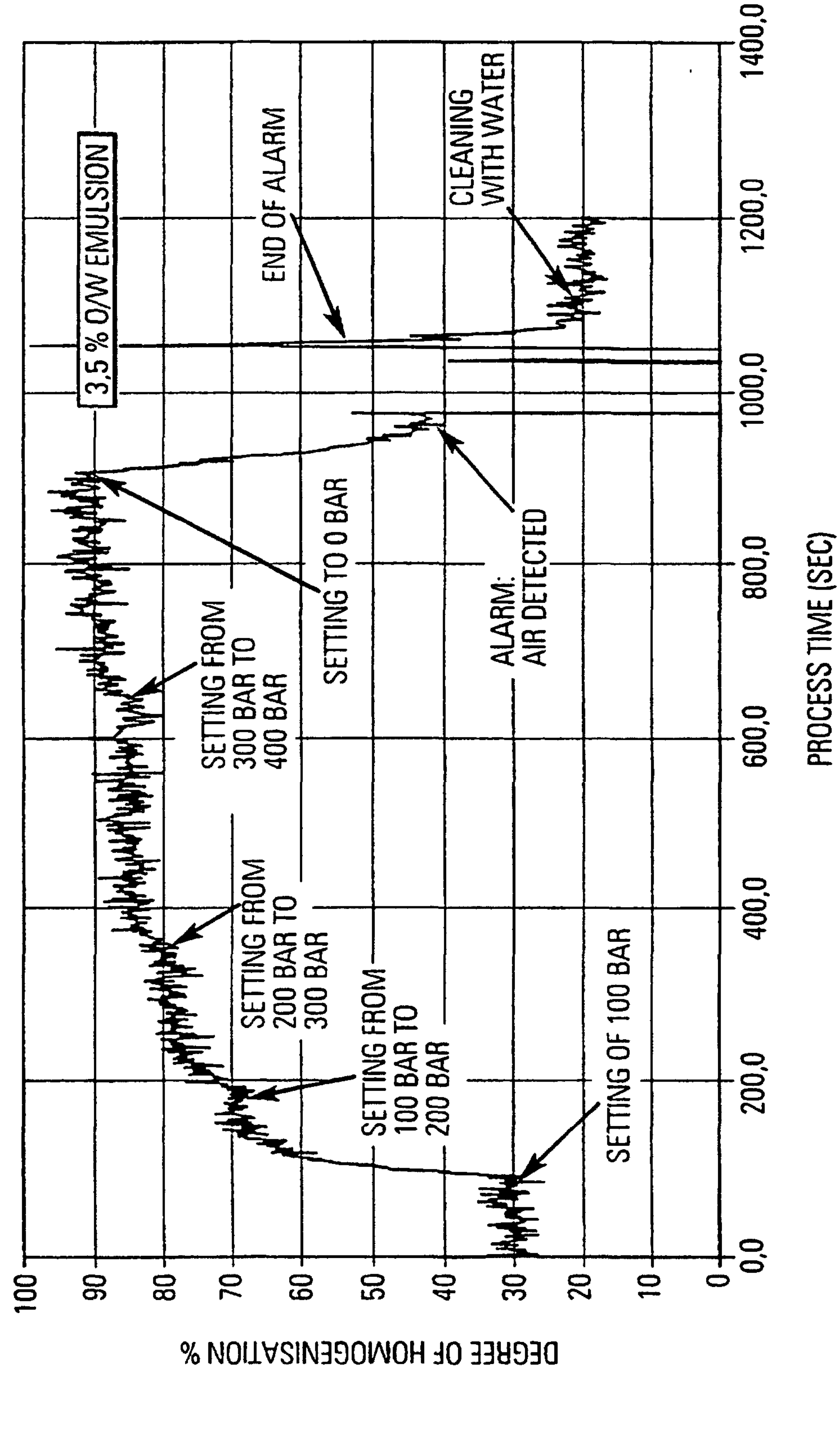

3,5 % O/W EMULSION
SETTING OF 100 BAR
SETTING FROM 100 BAR TO 200 BAR
SETTING FROM 200 BAR TO 300 BAR
SETTING FROM 300 BAR TO 400 BAR
SETTING TO 0 BAR
ALARM: AIR DETECTED
END OF ALARM
CLEANING WITH WATER
DEGREE OF HOMOGENISATION %
100
90
80
70
60
50
40
30
20
10
0
0,0
200,0
400,0
600,0
800,0
1000,0
1200,0
1400,0
PROCESS TIME (SEC)

FIG.2

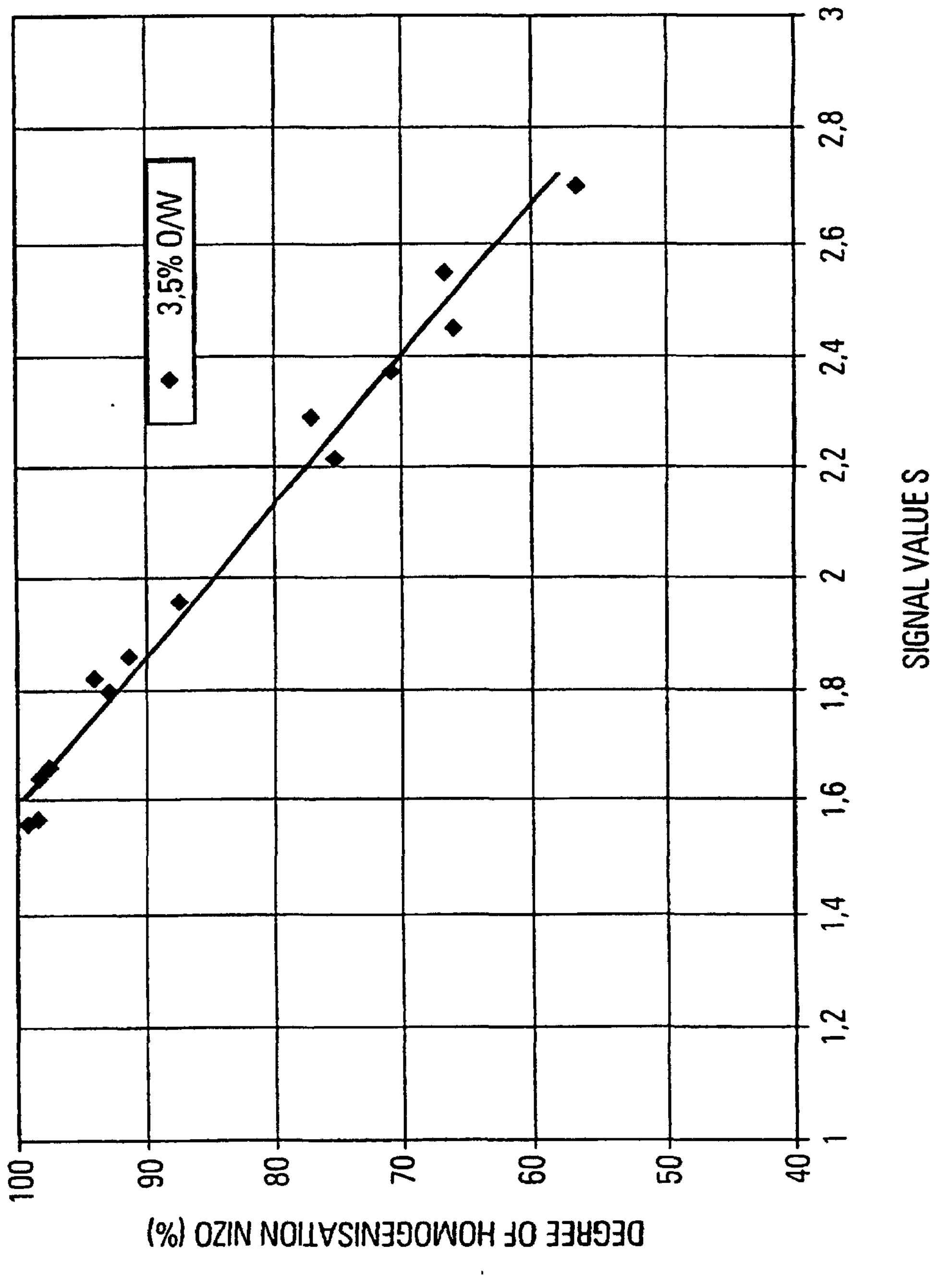
3,5% O/W
DEGREE OF HOMOGENISATION NIZO (%)
100
90
80
70
60
50
40
SIGNAL VALUE S
1
1,2
1,4
1,6
1,8
2
2,2
2,4
2,6
2,8
3

FIG.3

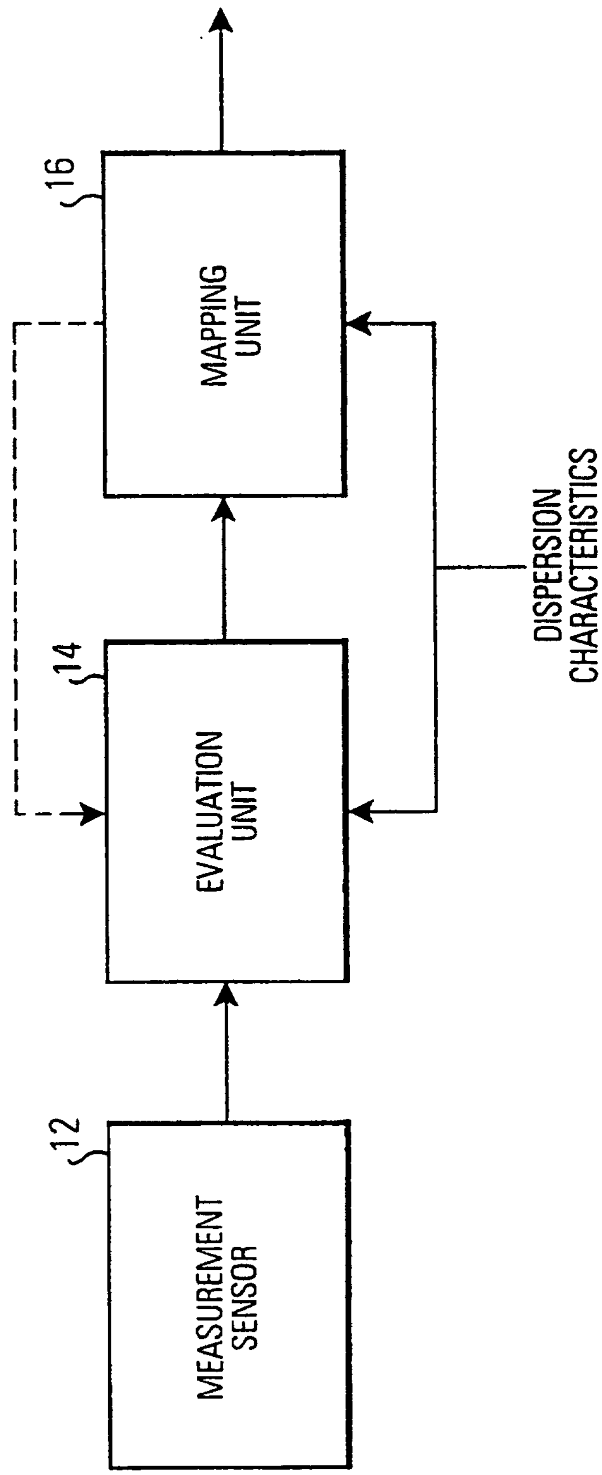
MEASUREMENT SENSOR
12
EVALUATION UNIT
14
MAPPING UNIT
16
DISPERSION CHARACTERISTICS

*FIG.4*

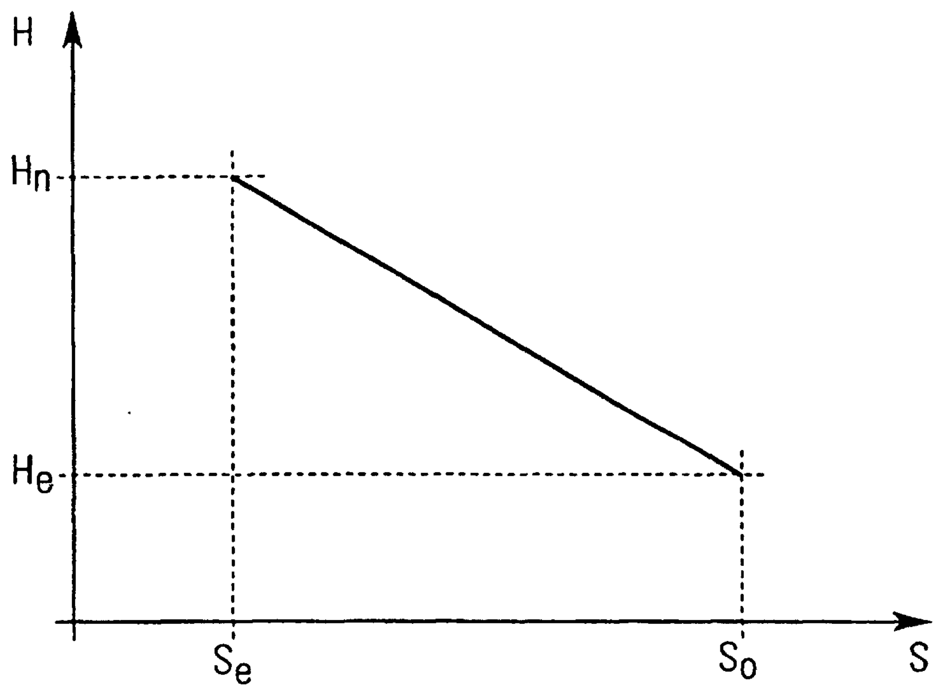

FIG.5

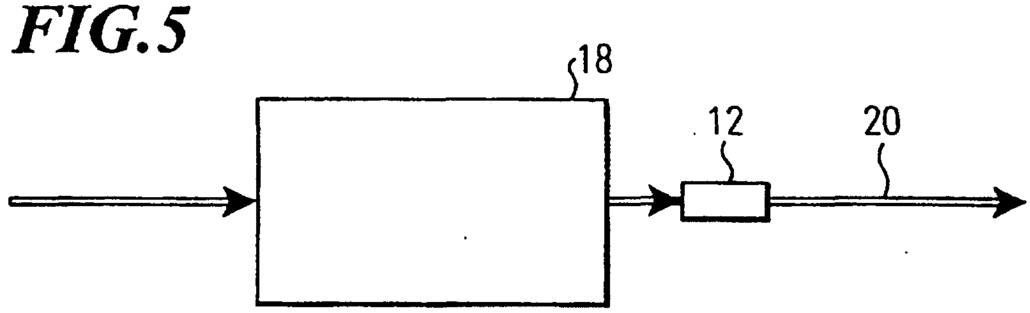


FIG.6

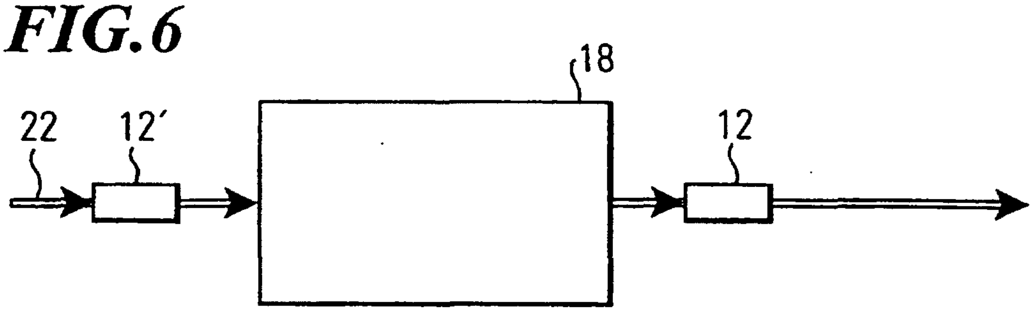


FIG.7